(19) 

**Europäisches Patentamt**
**European Patent Office**
**Office européen des brevets**

(11) **EP 4 524 339 A1**

(12) **EUROPEAN PATENT APPLICATION**

(43) Date of publication:
**19.03.2025 Bulletin 2025/12**

(21) Application number: **23197675.4**

(22) Date of filing: **15.09.2023**

(51) International Patent Classification (IPC):
**E04B 1/41** $^{(2006.01)}$    **F16B 37/04** $^{(2006.01)}$

(52) Cooperative Patent Classification (CPC):
**E04B 1/4107; F16B 37/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventors:
• **Gstach, Peter**
  **6719 Bludesch (AT)**
• **Rickers, Peter**
  **9466 Sennwald (CH)**
• **Casucci, Daniele**
  **9468 Sennwald (CH)**
• **Winkler, Bernhard**
  **6800 Feldkirch (AT)**
• **De Groof, Vincent**
  **6820 Frastanz (AT)**

(74) Representative: **Hilti Aktiengesellschaft**
**Corporate Intellectual Property**
**Feldkircherstrasse 100**
**Postfach 333**
**9494 Schaan (LI)**

(54) **CHANNEL SYSTEM**

(57)    Channel system comprising a channel and a T-bolt for engaging the channel through a longitudinal slot of the channel, wherein the channel has a channel serration comprising a plurality of channel serration teeth, wherein the channel serration has a channel serration pitch $p_{17}$ and a channel serration height $h_{17}$, and wherein the T-bolt has a bolt serration, for interlocking with the channel serration, wherein the bolt serration comprises a plurality of bolt serration teeth, wherein the bolt serration has a bolt serration pitch $p_{37}$ and a bolt serration height $h_{37}$, wherein the bolt serration pitch $p_{37}$ and the channel serration $p_{17}$ pitch are the same, characterized in that the bolt serration height $h_{37}$ is greater than the channel serration height $h_{17}$.

Fig. 5

EP 4 524 339 A1

**Description**

The invention relates to a channel system which comprises a channel and a T-bolt for engaging the channel through a longitudinal slot of the channel, according to the preamble of claim 1.

Channel systems comprising an anchor channel intended to be cast into concrete and T-bolt type channel bolts intended for engaging the anchor channel are, for example, described in ICC-ES Evaluation Report ESR-3520, Revised May 2023. The products HBC-B and HBC-T described therein provide mechanical interlock between matching serrations of the channel bolt and the lips of the anchor channel. This interlock can provide particularly good shear resistance loads in the longitudinal direction.

It is an object of the invention to provide a channel system that provides particularly good performance, whilst being particularly easy to manufacture.

This object is achieved by a device according to claim 1. Dependent claims refer to preferred embodiments of the invention.

Accordingly, there is provided a channel system comprising a channel and a T-bolt for engaging the channel through a longitudinal slot of the channel, wherein the channel has a channel serration comprising a plurality of channel serration teeth, wherein the channel serration has a channel serration pitch $p_{17}$ and a channel serration height $h_{17}$, and wherein the T-bolt has a bolt serration, for interlocking with the channel serration, wherein the bolt serration comprises a plurality of bolt serration teeth, wherein the bolt serration has a bolt serration pitch $p_{37}$ and a bolt serration height $h_{37}$, wherein the bolt serration pitch $p_{37}$ and the channel serration $p_{17}$ pitch are the same, characterized in that the bolt serration height $h_{37}$ is greater than the channel serration height $h_{17}$.

The invention is based on the finding that in typical configurations, the strength (in particular the tensile strength or/and the compressive strength) of the channel tends to be lower than the strength of the T-bolt, leading to a potential shear failure mode in which the channel serration shears off initially. In view of this, the invention proposes to provide the bolt serration teeth with greater height as compared to the channel serration teeth which are engaged by the bolt serration teeth. As both serrations have same pitch, this can lead to particular deep engagement of the channel serration, so that the entire height of the (relatively low strength) channel serration is used for engagement. As a consequence, particularly good performance can be achieved at particularly low effort.

The bolt serration pitch $p_{37}$ and the channel serration $p_{17}$ pitch are the same, i.e. $p_{37} = p_{17}$. The bolt serration height $h_{37}$ is greater than the channel serration height $h_{17}$, i.e. $h_{37} > h_{17}$.

In particular, the channel can be intended to be embedded in concrete. Preferably, the channel can be an anchor channel. An anchor channel comprises at least one concrete anchor. In particular, the at least one concrete anchor can be an anchor rod attached to a bottom of the channel (wherein the bottom of the channel can in particular be that side of the channel that is opposite the longitudinal slot). The longitudinal slot provides access to the inside of the channel.

The longitudinal slot of the channel is flanked by two channel lips. In particular, the channel serration is provided in one of the two channel lips. The channel can be provided with an additional channel serration, in particular in the respective other of the channel lips, and the T-bolt can have an additional bolt serration for interlocking with the additional channel serration.

The plurality of channel serration teeth are in particular arranged parallel to one another. The channel serration pitch can be regarded as the distance between two adjacent channel serration teeth. The channel serration height can be considered to be the height measured from the bottom of the channel serration to the top of the channel serration. In particular, the channel serration height can be constant throughout the channel serration. The channel serration can also comprise at least one auxiliary channel tooth.

In analogy, the plurality of bolt serration teeth are in particular arranged parallel to one another. The bolt serration pitch can be regarded as the distance between two adjacent bolt serration teeth. The bolt serration height can be considered to be the height measured from the bottom of the bolt serration to the top of the bolt serration. In particular, the bolt serration height can be constant throughout the bolt serration. The bolt serration can also comprise at least one auxiliary bolt tooth.

The bolt serration is intended for interlocking with the channel serration. In this interlocked state, the bolt serration teeth reach into channel serration valleys formed between the channel serration teeth, and the channel serration teeth reach into bolt serration valleys formed between the bolt serration teeth. The bolt serration and the channel serration are in particular linear serrations. Additional teeth and/or additional serrations might be provided on the T-bolt or/and on the channel, e.g. in order to further improve functionality.

It is particularly preferred that the following holds for the bolt serration height $h_{37}$ and the channel serration height $h_{17}$, respectively,

$$h_{37} \geq h_{17} \times 1.05,$$

preferably

$$h_{37} \geq h_{17} \times 1.07,$$

more preferably

$$h_{37} \geq h_{17} \times 1.10.$$

Accordingly, the bolt serration height is at least 5%, 7% or 10% greater than the channel serration height. This can provide particularly good channel teeth engagement and loading, further increasing performance.

It is particularly advantageous that the following holds for the bolt serration height $h_{37}$ and the channel serration height $h_{17}$,

$$h_{37} \geq h_{17} + 0.2 \text{ mm},$$

preferably

$$h_{37} \geq h_{17} + 0.3 \text{ mm}.$$

Accordingly, the bolt serration height is at least 0.2 millimeters (or 0.3 millimeters) greater than the channel serration height. For example, the bolt serration height $h_{37}$ can be 1.8 mm $\pm$ 0.15 mm. The channel serration height $h_{17}$ could e.g. be 1.5 mm + 0.3 mm/-0.1 mm.

According to another preferred embodiment of the invention, the bolt serration has a bolt serration included angle $\alpha_{37}$, and the channel serration has a channel serration included angle $\alpha_{17}$, wherein the following holds:

$$\alpha_{37} \leq \alpha_{17}$$

or, more preferably

$$\alpha_{37} < \alpha_{17}.$$

In accordance with usual definition, the included angles can be considered to be the angles included by the flanks of the respective serrations. According to the described embodiment, the included angle of the bolt serration is smaller than the included angle of the channel serration. In other words, the bolt serration teeth are sharper than the channel serration teeth.

These embodiments can further improve serration engagement and loading of the channel serration. For example, a channel serration included angle $\alpha_{17}$ of 60° can be provided. The bolt serration included angle $\alpha_{37}$ could e.g. range from 55° to 60°, included, i.e. $55° \leq \alpha_{37} \leq 60°$. It is particularly preferred that:

$$\alpha_{37} \times 1.05 \leq \alpha_{17}.$$

Advantageously, the bolt serration has a bolt serration tip radius $r_{37}$, and the channel serration has a channel serration bottom radius $r_{17}$, wherein the following holds:

$$r_{17} > r_{37},$$

more preferably,

$$r_{17} \geq r_{37} \times 1.05.$$

The bolt serration tip radius $r_{37}$ is that radius that is formed at the tips of the bolt serration teeth, whereas the channel serration bottom radius $r_{17}$ is that radius that is formed at the valleys formed between adjacent channel serration teeth. These embodiments can further improve serration engagement and loading of the channel serration. For example, the following can be provided:

bolt serration tip radius $r_{37}$ = 0.3 mm and/or
channel serration bottom radius $r_{17}$ = 0.6 mm.

Advantageously, the channel and/or the T-bolt consist of steel. More preferably, the bolt serration consists of steel and the channel serration consists of steel. In both cases, the steel could also be coated. Steel can provide a particularly well performing channel system at particularly low effort.

As already mentioned above, the bolt serration has preferably higher strength than the channel serration. It is particularly preferred that the material forming the bolt serration has higher tensile strength than the material forming the channel serration or/and that the material forming the bolt serration has higher compressive strength than the material forming the channel serration.

The invention is explained in greater detail below with reference to preferred exemplary embodiments, which are depicted schematically in the accompanying drawings. Individual features of the exemplary embodiments presented below can be implemented either individually or in any combination within the scope of the present invention.

Figure 1 is side view of a first embodiment of a channel system.

Figure 2 is a top view of the channel system of figure 1.

Figure 3 is a sectional view, according to A-A in figure 2, of the channel system of figure 1.

Figure 4 is a sectional view, according to B-B in figure 3, of the channel system of figure 1.

Figure 5 is a detail view Z, according to figure 4, of the channel system of figure 1.

Figure 6 is side view of a second embodiment of a channel system.

Figure 7 is a top view of the channel system of figure 6.

Figure 8 is a sectional view, according to A-A in figure 7, of the channel system of figure 6.

Figure 9 is a sectional view, according to B-B in figure 8, of the channel system of figure 6.

Figure 10 is a detail view Z, according to figure 9, of the channel system of figure 6.

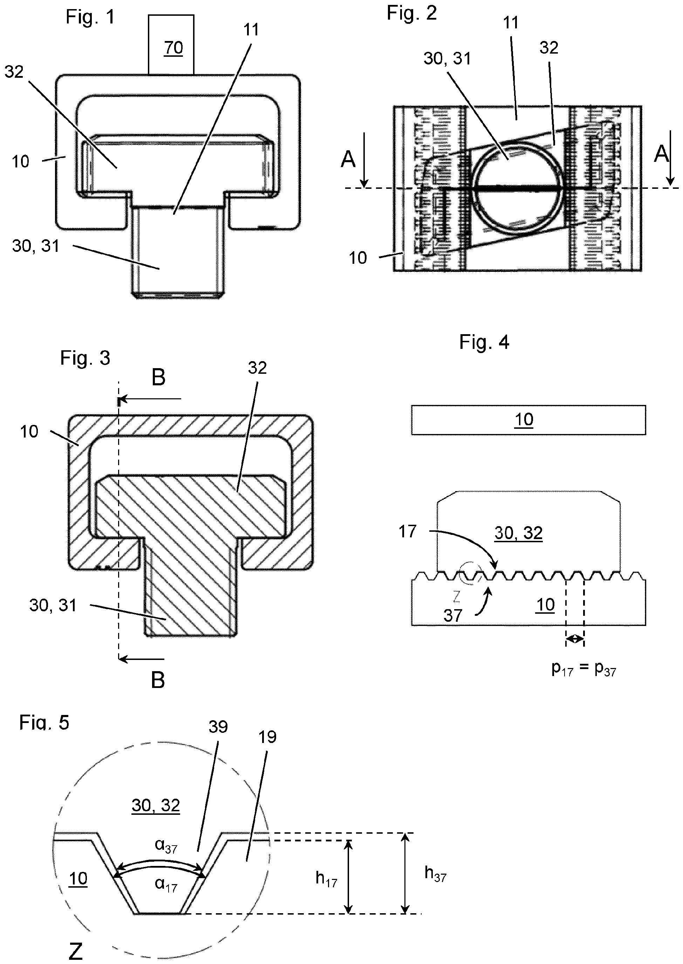

Figures 1 to 5 show a first embodiment of a channel system. The channel system comprises a C-channel type channel 10 having a longitudinal slot 11. The channel system further comprises a T-bolt 30 having a shaft 31 and a head 32. The T-bolt 30, in particular the head 32 thereof, is intended to be inserted through the longitudinal slot 11 into the channel 10, and to be locked within the channel 10 by rotation. In the figures, the T-bolt 30 is shown in this engaged state.

The channel 10 is preferably intended to be embedded in concrete. In particular, it can comprise at least one anchor rod 70, shown schematically and in figure 1 only.

The channel 10 is provided with a channel serration 17 that extends alongside the longitudinal slot 11, wherein the channel serration 17 comprises a plurality of channel serration teeth 19. The T-bolt 30 is provided, namely on its head 32, with a corresponding bolt serration 37 comprising a plurality of bolt serration teeth 39. The bolt serration 37 is intended to interlock with the channel serration 17 when the T-bolt engages the channel 10 as shown in the drawings. In the embodiment of figures 1 to 5, both the channel serration 17 and the bolt serration 37 are isosceles trapezoidal.

The channel serration 17 has a channel serration pitch $p_{17}$, a channel serration heigh $h_{17}$, and a channel serration included angle $\alpha_{17}$. In analogy, the T-bolt 30 has a bolt serration pitch $p_{37}$, a bolt serration heigh $h_{37}$, and a bolt included angle $\alpha_{37}$.

The channel serration pitch $p_{17}$ and the bolt serration pitch $p_{37}$ are generally the same, i.e. $p_{17} = p_{37}$. The bolt serration height $h_{37}$ is greater than the channel serration height $h_{17}$ (i.e. $h_{37} > h_{17}$), and the bolt serration included angle $\alpha_{37}$ is smaller than the channel serration included angle $\alpha_{17}$ (i.e. $\alpha_{37} < \alpha_{17}$). As a consequence, the bolt serration 37 reaches deeper into the channel serration 17 than does the channel serration 17 into the bolt serration 37, and, in particular, the bolt serration 37 reaches particularly deep into the channel serration 17.

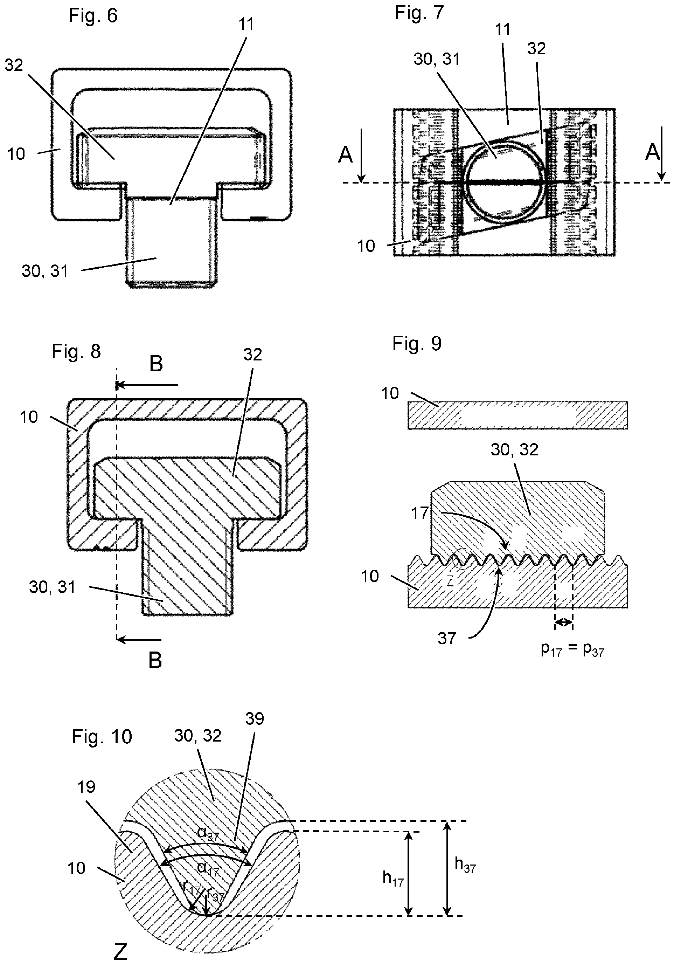

Figures 6 to 10 show an alternative embodiment of a channel system. The embodiment of figures 6 to 10 and the previous embodiment share a common basic concept. Therefore, in the following, focus will be on the differentiating features, whereas reference is made to the description above for the remaining features. Unless indicated otherwise, the description above applies mutatis mutandis to the embodiment of figures 6 to 10.

In particular, the embodiment of figures 6 to 10 differs from that of figures 1 to 5 in the cross-sectional shape of the respective serrations. In the embodiment of figures 1 to 5, the channel serration 17 and the bolt serration 37 both have isosceles trapezoidal cross-section, whereas in the embodiment of figures 6 to 10 the channel serration 17 and the bolt serration 37 both have sinusoidal cross-section. In the embodiment of figures 6 to 10, the bolt serration 37 thus has a bolt serration tip radius $r_{37}$, and the channel serration has a channel serration bottom radius $r_{17}$. With respect to these radii, the following holds.

$$r_{17} > r_{37.}$$

Again, the channel serration pitch $p_{17}$ and the bolt serration pitch $p_{37}$ are generally the same, i.e. $p_{17} = p_{37}$, whereas the bolt serration height $h_{37}$ is greater than the channel serration height $h_{17}$ (i.e. $h_{37} > h_{17}$), and the bolt serration included angle $\alpha_{37}$ is smaller than the channel serration included angle $\alpha_{17}$ (i.e. $\alpha_{37} < \alpha_{17}$). As a consequence, the bolt serration 37 again reaches deeper into the channel serration 17 than does the channel serration 17 into the bolt serration 37.

**Claims**

1. Channel system comprising a channel (10) and a T-bolt (30) for engaging the channel (10) through a longitudinal slot (11) of the channel (10),

    - wherein the channel (10) has a channel serration (17) comprising a plurality of channel serration teeth (19), wherein the channel serration (17) has a channel serration pitch $p_{17}$ and a channel serration height $h_{17}$, and
    - wherein the T-bolt (30) has a bolt serration (37), for interlocking with the channel serration (17), wherein the bolt serration (37) comprises a plurality of bolt serration teeth (39), wherein the bolt serration (37) has a bolt serration pitch $p_{37}$ and a bolt serration height $h_{37}$,
    - wherein the bolt serration pitch $p_{37}$ and the channel serration $p_{17}$ pitch are the same, **characterized in that**
    - the bolt serration height $h_{37}$ is greater than the channel serration height $h_{17}$.

2. Channel system according to claim 1,
   **characterized in that**
   the following holds for the bolt serration height $h_{37}$ and the channel serration height $h_{17}$,

$$h_{37} \geq h_{17} \times 1.05,$$

   preferably

$$h_{37} \geq h_{17} \times 1.07,$$

more preferably

$$h_{37} \geq h_{17} \times 1.10.$$

3. Channel system according to any of the preceding claims,
   **characterized in that**
   the following holds for the bolt serration height $h_{37}$ and the channel serration height $h_{17}$,

   $$h_{37} \geq h_{17} + 0.2 \text{ mm},$$

   preferably

   $$h_{37} \geq h_{17} + 0.3 \text{ mm}.$$

4. Channel system according to any of the preceding claims,
   **characterized in that**
   the bolt serration (37) has a bolt serration included angle $\alpha_{37} \geq \alpha_{17}$, and the channel serration (17) has a channel serration included angle $\alpha_{17}$, wherein the following holds:

   $$\alpha_{37} < \alpha_{17.}$$

5. Channel system according to any of the preceding claims,
   **characterized in that**
   the bolt serration (37) has a bolt serration tip radius $r_{37}$, and the channel serration (17) has a channel serration bottom radius $r_{17}$, wherein the following holds:

   $$r_{17} > r_{37.}$$

6. Channel system according to any of the preceding claims,
   **characterized in that**
   the bolt serration (37) consists of steel and the channel serration (17) consists of steel.

7. Channel system according to any of the preceding claims,
   **characterized in that**

   the material forming the bolt serration (37) has higher tensile strength than the material forming the channel serration (17) or/and
   the material forming the bolt serration (37) has higher compressive strength than the material forming the channel serration (17).

Fig. 1

32

10

11

30, 31

70

Fig. 2

30, 31

11

32

A

A

10

Fig. 3

B

32

10

30, 31

B

Fig. 4

10

17

30, 32

37

Z

10

$p_{17} = p_{37}$

Fig. 5

39

19

30, 32

$\alpha_{37}$

$\alpha_{17}$

10

$h_{17}$

$h_{37}$

Z

Fig. 6

32

11

10

30, 31

Fig. 7

11

30, 31

32

A

A

10

Fig. 8

B

32

10

30, 31

B

Fig. 9

10

30, 32

17

10

Z

37

$p_{17} = p_{37}$

Fig. 10

30, 32

39

19

$\alpha_{37}$

$\alpha_{17}$

10

$r_{17}/r_{37}$

$h_{17}$

$h_{37}$

Z

Europäisches
Patentamt

European
Patent Office

Office européen
des brevets

# EUROPEAN SEARCH REPORT

**Application Number**

EP 23 19 7675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 323 936 A2 (HILTI AG [LI]) 2 July 2003 (2003-07-02) * paragraphs [0006], [0013] - [0015]; figures 1-3 * | 1-7 | INV. E04B1/41 F16B37/04 |
| A | GB 2 050 549 A (BICC LTD) 7 January 1981 (1981-01-07) * page 2, lines 3-17; figures 1-5 * | 1-7 | |

**TECHNICAL FIELDS SEARCHED (IPC)**

E04B
F16B

The present search report has been drawn up for all claims

| Place of search | Date of completion of the search | Examiner |
|---|---|---|
| The Hague | 15 February 2024 | Couprie, Brice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                          

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 7675**

This annex lists the patent family members relating to the patent documents cited in  the above-mentioned European search report.
The members are as contained in the European Patent Office EDP file on
The European Patent Office is in no way liable for these particulars which are merely given for the purpose of information.

**15-02-2024**

| Patent document cited in search report | | Publication date | Patent family member(s) | | Publication date |
|---|---|---|---|---|---|
| EP 1323936 | A2 | 02-07-2003 | DE | 10159600 A1 | 12-06-2003 |
| | | | EP | 1323936 A2 | 02-07-2003 |
| | | | US | 2003122044 A1 | 03-07-2003 |
| GB 2050549 | A | 07-01-1981 | NONE | | |

EPO FORM P0459

For more details about this annex : see Official Journal of the European Patent Office, No. 12/82